(19) Europäisches Patentamt / European Patent Office / Office européen des brevets

(11) **EP 4 215 361 A1**

(12) **EUROPEAN PATENT APPLICATION**
published in accordance with Art. 153(4) EPC

(43) Date of publication:
**26.07.2023 Bulletin 2023/30**

(21) Application number: **21900423.1**

(22) Date of filing: **18.11.2021**

(51) International Patent Classification (IPC):
**B32B 27/00** (2006.01)   **B32B 27/20** (2006.01)
**B32B 27/32** (2006.01)   **B65D 65/40** (2006.01)
**B65D 75/26** (2006.01)

(52) Cooperative Patent Classification (CPC):
**B32B 27/00; B32B 27/20; B32B 27/32;**
**B65D 65/40; B65D 75/26**

(86) International application number:
**PCT/JP2021/042473**

(87) International publication number:
**WO 2022/118668 (09.06.2022 Gazette 2022/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.12.2020 JP 2020201609**

(71) Applicant: **TOPPAN INC.**
**Tokyo 110-0016 (JP)**

(72) Inventors:
• **TANAKA, Ryo**
  **Tokyo 110-0016 (JP)**
• **NAGAI, Aki**
  **Tokyo 110-0016 (JP)**
• **WAKABAYASHI, Hiroyuki**
  **Tokyo 110-0016 (JP)**

(74) Representative: **TBK**
**Bavariaring 4-6**
**80336 München (DE)**

(54) **PACKAGING MATERIAL FILM AND PACKAGING MATERIAL, PACKAGING BAG, AND PACKAGING COMPRISING SAME**

(57)   A packaging material film according to the present disclosure includes a first resin layer that contains a polyolefin resin and a porous filler. A ratio Y/X of an average particle size $Y$ $\mu$m of the porous filler to a thickness $X$ $\mu$m of the first resin layer is 0.02 to 3.5, and a content percentage of the porous filler in the first resin layer is 0.5 to 30 mass%. A packaging material according to the present disclosure includes a substrate and a packaging material film disposed on the substrate. In the packaging material, the packaging material film is formed of the above packaging material film, and a surface of the first resin layer of the packaging material film on a side opposite from the substrate is exposed.

*Fig.1*

EP 4 215 361 A1

## Description

### Technical Field

The present disclosure relates to a packaging material film and a packaging material, a packaging bag, and packaging that include the same.

### Background Art

Packaging with oil-in-water-dispersed contents, such as curry, sealed therein is hitherto known. In such packaging, the following problems have been pointed out. For example, when the packaging is opened and the contents are discharged, the contents cannot be completely used up, resulting in waste, stains due to adhesion of the contents are generated, and the operation of discharging the contents is time-consuming.

Therefore, the packaging is desired to cause the contents to easily slide down when opened, that is, to provide the contents with good sliding properties.

For example, Patent Literature 1 proposes that, with packaging using a packaging sheet including a heat seal layer that contains polyolefin particles having an average particle size D50 of 10 to 50 $\mu$m and a melting point of 100°C to 180°C and that has a surface roughness Ra of 1.00 to 7.00 $\mu$m, the surfaces of contents are made even less likely to adhere, so that the contents are easily discharged from the packaging.

### Citation List

### Patent Literature

PTL 1: International Publication No. 2018/003978

### Summary of Invention

### Technical Problem

However, the packaging described in Patent Literature 1 has the following problem.

That is, the packaging described in Patent Literature 1 has room for improvement in terms of the ease of discharge of the contents when opened, that is, sliding properties.

The present disclosure has been made in view of the circumstances described above, and an object of the present disclosure is to provide a packaging material film capable of providing oil-in-water-dispersed contents with good sliding properties through heat treatment and a packaging material, a packaging bag, and packaging that include the packaging material film. In the present disclosure, the "oil-in-water-dispersed contents" mean contents containing water and a lipid and having a water content higher than a lipid content. The concept of the term "lipid" includes oil that is liquid at 20°C (room temperature) and fat that is solid at 20°C. Hereinafter, the oil contained in oil-in-water-dispersed contents and fat which is the aforementioned fat and which becomes liquid through heat treatment performed on the packaging material film according to the present disclosure are collectively referred to as an "oil component".

### Solution to Problem

To solve the above problem, an aspect of the present disclosure is a packaging material film including a first resin layer that contains a polyolefin resin and a porous filler, in which a ratio Y/X of an average particle size Y $\mu$m of the porous filler to a thickness X $\mu$m of the first resin layer is 0.02 to 3.5, and a content percentage of the porous filler in the first resin layer is 0.5 to 30 mass%. The content percentage of the porous filler refers to an addition rate based on 100 mass% of the polyolefin resin.

According to this packaging material film, the polyolefin resin in the first resin layer can absorb an oil component and swell under the temperature condition of retort treatment or boiling treatment. Accordingly, when the packaging material film is used for a packaging material of packaging with oil-in-water-dispersed contents sealed therein, and heat treatment such as retort treatment or boiling treatment is performed while the oil-in-water-dispersed contents are brought into contact with the surface of the first resin layer of the packaging material film, a portion of the oil component in the contents is absorbed by the first resin layer. At this time, in the first resin layer, since the ratio Y/X of the average particle size Y $\mu$m of the porous filler to the thickness X $\mu$m of the first resin layer is 0.02 to 3.5, a surface of the first resin layer on a side facing the contents can have suitable irregularities to increase the contact area between the first resin layer and the oil-in-water-dispersed contents. Consequently, the oil component contained in the contents is easily absorbed by the first resin layer, and lipophilicity of the first resin layer is improved. In addition, the first resin layer contains the porous filler at a suitable content percentage, and the porous filler can adsorb an oil component and thus can absorb the oil component absorbed by the polyolefin resin. Accordingly, the polyolefin resin can have room for absorbing the oil component from the oil-in-water-dispersed contents to promote absorption of the oil component contained in the oil-in-water-dispersed contents into the first resin layer. Thus, an oil film is likely to be stably formed between the surface of the first resin layer and the contents by a synergetic effect between the irregularities of the surface of the first resin layer and the improvement in lipophilicity due to oil absorption. When the oil film is present between the surface of the first resin layer and the contents, a direct contact between the contents and the surface of the first resin layer is suppressed, and the contents whose surface layer portion is constituted by water easily slide with respect to the water-repellent oil film serving as an interface. Accordingly, the packaging material film according to the present disclosure can provide oil-in-water-dispersed contents with good sliding properties through heat treatment.

In the packaging material film, the porous filler preferably has an oil absorption of 100 to 380 mL/100 g.

When the oil absorption of the porous filler is within the above range, the packaging material film can effectively provide oil-in-water-dispersed contents with good sliding properties compared with the case where the oil absorption is less than 100 mL/100 g. In addition, as compared with the case where the oil absorption exceeds 380 mL/100 g, the porous filler suitably adsorbs an oil component to easily form an oil film on the surface of the first resin layer; therefore, the packaging material film can provide oil-in-water-dispersed contents with better sliding properties.

In the packaging material film, a surface of the first resin layer preferably has an arithmetical mean roughness Sa of 2.0 $\mu$m or less.

When the arithmetical mean roughness Sa of the surface of the first resin layer is 2.0 $\mu$m or less, suitable irregularities are likely to be formed on the surface of the first resin layer compared with the case where Sa exceeds 2.0 $\mu$m, and oil-in-water-dispersed contents can be provided with better sliding properties.

In the packaging material film, the porous filler preferably has an average particle size of 5 $\mu$m or more.

In this case, since a suitable arithmetical mean roughness can be provided with a suitable amount of the porous filler added, sliding properties of the contents can be efficiently improved while the influence on physical properties of the packaging material film, such as a decrease in the seal strength, is reduced.

In the packaging material film, it is preferable that the porous filler have a main portion and a cover portion covering at least a part of a surface of the main portion, and the cover portion be composed of a hydrophobic material.

In this case, since the porous filler is less likely to adsorb water, water in the oil-in-water-dispersed contents is less likely to be absorbed by the first resin layer of the packaging material film. Accordingly, in the first resin layer of the packaging material film, an oil component in the oil-in-water-dispersed contents can be selectively adsorbed to further enhance lipophilicity of the first resin layer; therefore, the formation of an oil film is further promoted on the surface of the first resin layer.

In the packaging material film, the first resin layer preferably further contains at least one additive selected from the group consisting of an elastomer composed of a block copolymer of polypropylene and polyethylene, a polypropylene-based elastomer, and a polyethylene-based elastomer.

By further incorporating the additive composed of the elastomer in the first resin layer, an oil film is uniformly and stably formed on the surface of the first resin layer when a packaging bag is formed using the packaging material film, contents are enclosed in the packaging bag, and the packaging bag is subjected to heat treatment. Therefore, the packaging material film can provide oil-in-water-dispersed contents with even better sliding properties.

Another aspect of the present disclosure is a packaging material including a substrate and a packaging material film disposed on the substrate, in which the packaging material film is formed of the packaging material film described above, and a surface of the first resin layer of the packaging material film on a side opposite from the substrate is exposed.

This packaging material includes the packaging material film described above, and when the packaging material film is heat-treated while the exposed surface on the side opposite from the substrate is brought into contact with oil-in-water-dispersed contents, good sliding properties can be provided for the oil-in-water-dispersed contents. In addition, since this packaging material further includes the substrate, the packaging material film is reinforced by the substrate.

A still another aspect of the present disclosure is a packaging bag for storing oil-in-water-dispersed contents, in which the packaging bag is formed using the packaging material described above, and the first resin layer is arranged on an inner side.

According to this packaging bag, the packaging material film included in the packaging material can provide, through heat treatment, the oil-in-water-dispersed contents coming in contact with the first resin layer with good sliding properties. Therefore, when oil-in-water-dispersed contents are enclosed in the packaging bag to obtain packaging and the packaging is then subjected to heat treatment such as retort treatment or boiling treatment, in discharging the oil-in-water-dispersed contents from the packaging after opening of the packaging, the oil-in-water-dispersed contents can be easily slid down. This can reduce the amount of residual liquid of the oil-in-water-dispersed contents, prevent waste of the contents, and prevent stains due to adhesion of the contents. In addition, this enables the operation of discharging the contents to be efficiently performed.

A still another aspect of the present disclosure is packaging including the packaging bag described above and oil-in-water-dispersed contents enclosed in the packaging bag.

According to this packaging, the packaging material film included in the packaging material can provide, through heat treatment, the oil-in-water-dispersed contents coming in contact with the first resin layer with good sliding properties. Therefore, when the packaging is subjected to heat treatment such as retort treatment or boiling treatment, in discharging the oil-in-water-dispersed contents from the packaging after opening of the packaging, the oil-in-water-dispersed contents can be easily slid down. This can reduce the amount of residual liquid of the oil-in-water-dispersed contents, prevent waste of the contents, and prevent stains due to adhesion of the contents. In addition, this enables the operation of discharging the contents to be efficiently performed.

**Advantageous Effects of Invention**

According to the present disclosure, there are provided a packaging material film capable of providing oil-in-water-dispersed contents with good sliding properties through heat treatment and a packaging material, a packaging bag, and a packaging body that include the packaging material film.

**Brief Description of Drawings**

[Fig. 1] Fig. 1 is a schematic sectional view illustrating an embodiment of a packaging material according to the present disclosure.
[Fig. 2] Figs. 2(a) to 2(c) are a series of schematic views illustrating a mechanism in which a packaging material according to the present disclosure can provide oil-in-water-dispersed contents with good sliding properties.
[Fig. 3] Fig. 3 is a sectional view illustrating an embodiment of packaging according to the present disclosure.
[Fig. 4] Figs. 4(a) to 4(e) are a series of schematic views illustrating a method for evaluating sliding properties of contents with respect to a packaging material.

**Description of Embodiments**

Hereinafter, embodiments of the present disclosure will be described in detail with reference to the drawings. In the drawings, the same or similar constituent elements are assigned the same reference signs, and redundant description thereof is omitted. The dimensional ratios in the drawings are not limited to the ratios illustrated in the drawings.

<Packaging Material>

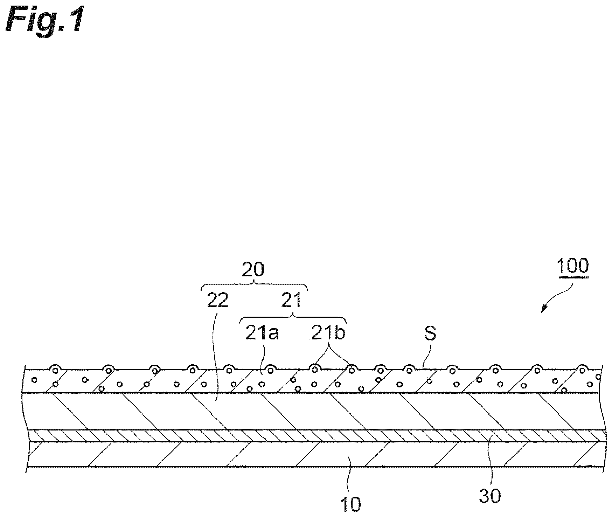

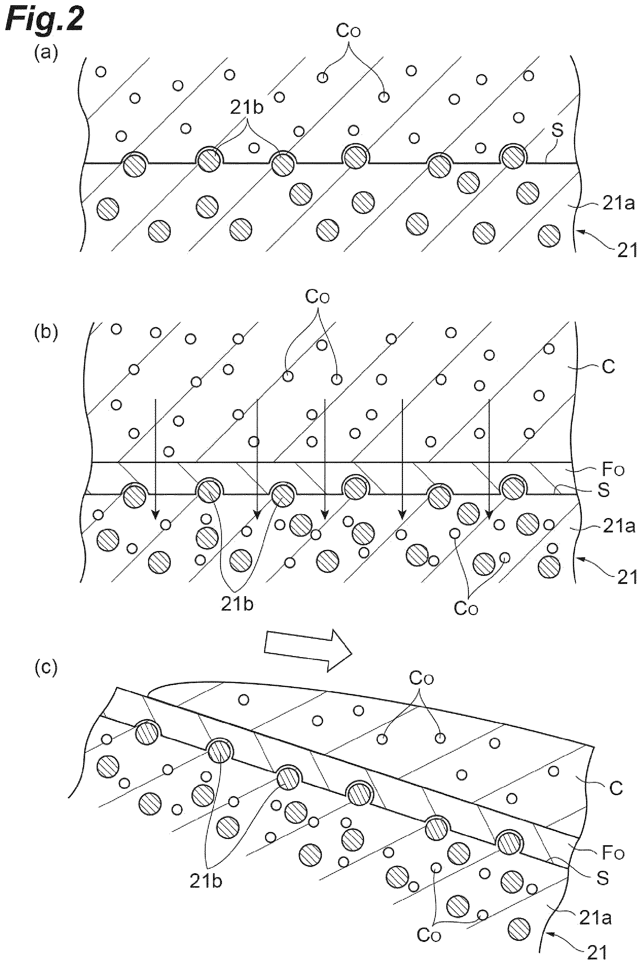

First, an embodiment of a packaging material according to the present disclosure will be described with reference to Figs. 1 and 2. Fig. 1 is a schematic sectional view illustrating an embodiment of a packaging material according to the present disclosure, and Figs. 2(a) to 2(c) are a series of schematic views illustrating a mechanism in which the packaging material according to the present disclosure can provide oil-in-water-dispersed contents with good sliding properties.

A packaging material 100 illustrated in Fig. 1 is used to form a packaging bag for storing oil-in-water-dispersed contents. The oil-in-water-dispersed contents refer to contents containing water and an oil component and having a water content higher than an oil component content. The amount of oil component contained in the oil-in-water-dispersed contents is, for example, 0.1 mass% or more and less than 50 mass% and may be 0.5 to 40 mass% or 1 to 20 mass%. Specific examples of oil-in-water-dispersed contents include curry, hash, pasta sauce (e.g., meat sauce), and pet food. Incidentally, the amount of oil component contained in curry is, for example, about 0.2 to 15 mass%, and the amount of water contained in curry is, for example, about 70 to 90 mass%.

The packaging material 100 includes a substrate 10, a packaging material film 20 disposed on the substrate 10, and an adhesive layer 30 that bonds the substrate 10 to the packaging material film 20.

The packaging material film 20 includes a first resin layer 21 that contains a polyolefin resin and a porous filler and a second resin layer 22. In the packaging material film 20, the first resin layer 21 is disposed on the side opposite from the substrate 10 with respect to the second resin layer 22, and the second resin layer 22 is disposed on a side facing the substrate 10. Specifically, a surface S of the first resin layer 21 on the side opposite from the substrate 10 is exposed. This surface S of the first resin layer 21 serves as an inner surface of a packaging bag (e.g., a retort pouch) when the packaging material 100 is used to form the packaging bag.

The first resin layer 21 contains a resin composition 21a containing a polyolefin resin and a porous filler 21b dispersed in the resin composition 21a. In the first resin layer 21, a ratio Y/X of an average particle size Y $\mu$m of the

porous filler to a thickness X $\mu$m of the first resin layer 21 is 0.02 to 3.5, and a content percentage of the porous filler in the first resin layer 21 is 0.5 to 30 mass%.

According to the packaging material 100, the polyolefin resin contained in the first resin layer 21 of the packaging material film 20 can absorb an oil component and swell under the temperature condition of retort treatment or boiling treatment. Accordingly, when the packaging material 100 is used for packaging with oil-in-water-dispersed contents C sealed therein, the oil-in-water-dispersed contents C are brought into contact with the surface S of the first resin layer 21 of the packaging material film 20 (see Fig. 2(a)), and heat treatment such as retort treatment or boiling treatment is performed in this state, a portion of an oil component $C_O$ contained in the contents C is absorbed by the first resin layer 21 (see Fig. 2(b)).

At this time, in the first resin layer 21, since the ratio Y/X of the average particle size Y $\mu$m of the porous filler 21b to the thickness X $\mu$m of the first resin layer 21 is 0.02 to 3.5, the surface S of the first resin layer 21 on a side facing the contents C can have suitable irregularities due to the porous filler 21b to increase the contact area between the first resin layer 21 and the oil-in-water-dispersed contents C. Consequently, the oil component $C_O$ contained in the contents C is easily absorbed by the first resin layer 21, and lipophilicity of the first resin layer 21 is improved.

Furthermore, the porous filler 21b is contained in the first resin layer 21 at a suitable content percentage, and the porous filler 21b can adsorb the oil component $C_O$ and can absorb the oil component $C_O$ absorbed by the polyolefin resin. Accordingly, the polyolefin resin can have room for absorbing the oil component $C_O$ from the oil-in-water-dispersed contents C to promote absorption of the oil component $C_O$ contained in the oil-in-water-dispersed contents C into the first resin layer 21.

Thus, an oil film $F_O$ is likely to be stably formed between the surface S of the first resin layer 21 and the contents C by a synergetic effect between the irregularities of the surface S of the first resin layer 21 and the improvement in lipophilicity due to oil absorption. When the oil film $F_O$ is present between the surface S of the first resin layer 21 and the contents C, a direct contact between the contents C and the surface S of the first resin layer 21 is suppressed, and the contents C whose surface layer portion is constituted by water easily slide with respect to the water-repellent oil film $F_O$ serving as an interface.

Therefore, as illustrated in Fig. 2(c), the oil-in-water-dispersed contents C easily slide on the oil film $F_O$ when the surface S of the packaging material 100 is merely inclined. Accordingly, the packaging material 100 can provide the oil-in-water-dispersed contents C with good sliding properties through heat treatment.

Since the polyolefin resin has thermal adhesiveness, the first resin layer 21 can also function as a sealant film. Accordingly, in the formation of packaging from the packaging material 100, the packaging can be easily formed by arranging first resin layers 21 to face inward, and subjecting the first resin layers 21 to heat-fusion bonding together.

The first resin layer 21, the second resin layer 22, the substrate 10, and the adhesive layer 30 that form the packaging material 100 will be described below.

(First Resin Layer)

The first resin layer 21 is a layer that is subjected to heat treatment (e.g., retort treatment and boiling treatment) in a state of being in contact with oil-in-water-dispersed contents C to thereby provide the oil-in-water-dispersed contents C with good sliding properties.

The content percentage of a polyolefin resin in the resin composition 21a is usually 75 mass% or more and may be 80 mass% or more or 90 mass% or more. The resin composition 21a may consist essentially of a polyolefin resin.

Examples of the polyolefin resin include polypropylene resins, polyethylene resins, and polybutylene resins. Of these, polypropylene resins are preferred because of their good heat resistance.

Examples of polyethylene resins include low-density polyethylene, linear low-density polyethylene, medium-density polyethylene, high-density polyethylene, and ethylene-$\alpha$-olefin copolymers.

Examples of an $\alpha$-olefin component in the ethylene-$\alpha$-olefin copolymers include propylene, 1-butene, 1-pentene, 1-hexene, 1-heptene, 1-octene, and 4-methyl-1-pentene. An example of the ethylene-$\alpha$-olefin copolymers is ethylene propylene rubber. The ethylene-$\alpha$-olefin copolymers may be random copolymers.

Examples of polypropylene resins include homopolypropylene, random polypropylene, propylene-$\alpha$-olefin co-polymers, and modified polypropylene. The "random polypropylene" means a random copolymer of propylene and an $\alpha$-olefin.

Examples of an $\alpha$-olefin component in the propylene-$\alpha$-olefin copolymers include 1-butene, 1-pentene, 1-hexene, 1-heptene, 1-octene, and 4-methyl-1-pentene. The propylene-$\alpha$-olefin copolymers may be random copolymers or block copolymers.

The polyolefin resin may be a mixture of a polypropylene resin and a polyethylene resin. The polyolefin resin may be, for example, a mixture of homopolypropylene, a rubber component such as ethylene propylene rubber (EPR), and polyethylene (hereinafter referred to as "block polypropylene").

When the polyolefin resin includes block polypropylene and random polypropylene, a mass ratio of block polypropylene to random polypropylene (block polypropylene/random polypropylene) is preferably 20/80 to 80/20 and more preferably 40/60 to 60/40. Besides the above, the polyolefin resin may be a cyclic polyolefin such as polynorbornene. In view of sealing properties and strength physical properties (such as tensile strength and impact strength), the polyolefin resin is preferably a linear polyolefin, and the linear polyolefin may have a straight chain or a branched chain.

The modified polypropylene is obtained by, for example, subjecting polypropylene to graft modification with an unsaturated carboxylic acid derivative component derived from an unsaturated carboxylic acid, an anhydride of an unsaturated carboxylic acid, an ester of an unsaturated carboxylic acid, or the like. A modified polypropylene such as a hydroxyl group-modified polypropylene or an acrylic-modified polypropylene may also be used as the modified polypropylene. When polypropylene is a polypropylene-based copolymer, an $\alpha$-olefin component used for obtaining the polypropylene-based copolymer may be, for example, 1-butene, 1-pentene, 1-hexene, 1-heptene, 1-octene, or 4-methyl-1-pentene.

The porous filler 21b includes a main portion. The main portion included in the porous filler 21b may be composed of an inorganic substance or an organic substance. Examples of the organic substance include polyolefin resins and acrylic resins. Examples of the acrylic resins include crosslinked poly(meth)acrylic acid esters such as crosslinked polymethyl methacrylate. These may be used alone or in combination of two or more thereof. Examples of the inorganic substance include mineral fillers such as silica, talc, ceramics, glass beads, and calcium carbonate, carbon black, glass fibers, ceramic fibers, and carbon fibers. These also may be used alone or in combination of two or more thereof. Examples of the porous filler 21b composed of an organic substance include TECHPOLYMER MBP series manufactured by Sekisui Kasei Co., Ltd. and TECHPOLYMER ACP series manufactured by Sekisui Kasei Co., Ltd. Examples of the porous filler 21b composed of an inorganic substance include SYLOPHOBIC series manufactured by Fuji Silysia Chemical Ltd. and SUNSPHERE series manufactured by AGC Si-Tech Co., Ltd.

The porous filler 21b may further include a cover portion covering at least a part of the main portion. The cover portion may be composed of a hydrophilic material or a hydrophobic material but is preferably composed of a hydrophobic material. Herein, the hydrophobic material refers to a material having a DBA (di-n-butylamine) value of 200 mEq/kg or less, and the DBA value refers to an amount of DBA adsorbed on the surface of the main portion. The DBA value corresponds to an amount of DBA adsorbed to hydroxyl groups on the surface of the main portion, and a smaller DBA value indicates a smaller amount of hydroxyl groups (higher hydrophobicity).

The porous filler 21b composed of the main portion and the cover portion can be obtained by, for example, causing the main portion to chemically react with a raw material of the hydrophobic material, namely, hydrophobizing the main portion. Examples of the raw material of the hydrophobic material include organosilicon compounds. In particular, an organosilicon compound is preferred as the raw material of the hydrophobic material.

The oil absorption of the porous filler 21b is not particularly limited but is preferably 100 to 380 mL/100 g. The oil absorption of the porous filler 21b refers to an oil absorption measured in accordance with JIS K5101-13 (Test methods for pigments - Part 13: Oil absorption).

When the oil absorption of the porous filler 21b is within the above range, the packaging material film 20 can effectively provide the oil-in-water-dispersed contents C enclosed in packaging with good sliding properties compared with the case where the oil absorption is less than 100 mL/100 g. In addition, as compared with the case where the oil absorption exceeds 380 mL/100 g, the porous filler 21b suitably adsorbs an oil component to easily form an oil film $F_O$ on the surface of the first resin layer 21; therefore, the packaging material film 20 can provide the oil-in-water-dispersed contents C enclosed in the packaging with better sliding properties.

The oil absorption of the porous filler 21b is more preferably 110 mL/100 g or more and particularly preferably 120 mL/100 g or more.

However, the oil absorption of the porous filler 21b is preferably 300 mL/100 g or less. In this case, the porous filler 21b more suitably adsorbs an oil component to more easily form an oil film $F_O$ on the surface of the first resin layer 21; therefore, the packaging material film 20 can provide the oil-in-water-dispersed contents C enclosed in the packaging with better sliding properties.

The average particle size (Y $\mu$m) of the porous filler 21b is determined by the following methods depending on the type of filler.

(Calculation Method by Laser Diffraction Particle Size Distribution Measurement)

(1) The porous filler 21b is dispersed in a dispersion medium. The dispersion medium is, for example, water or an organic solvent and is appropriately selected depending on the type of filler.
(2) A laser diffraction particle size distribution analyzer (product name: "MT3300EX II", manufactured by MicrotracBEL Corp.) is used to calculate the average particle size of the porous filler 21b by a laser diffraction-scattering method.

(Calculation Method by Microscopic Observation)

If the laser diffraction particle size distribution measurement is not suitable, or is difficult, an optical microscope such as a scanning electron microscope (SEM) or a laser microscope may be used to determine the average particle size of the porous filler 21b.

For particles randomly selected in a field of view observed by microscopic observation, the lengths of a maximum diameter and a minimum diameter of the particle are measured, and a value obtained by dividing the sum of the lengths by 2 is determined as a particle size. The particle sizes of a plurality of particles are measured and calculated, and the average thereof is regarded as the average particle size. The number of the particles randomly selected is preferably 10 or more.

The average particle size (Y $\mu$m) of the porous filler 21b is not particularly limited as long as Y/X is 0.02 to 3.5 but is preferably 3 $\mu$m or more and more preferably 5 $\mu$m or more. In this case, since a suitable arithmetical mean roughness can be provided with a suitable amount of the porous filler 21b added, sliding properties of the contents C can be efficiently improved while the influence on physical properties of the packaging material film 20, such as a decrease in the seal strength, is reduced.

The average particle size (Y $\mu$m) of the porous filler 21b is particularly preferably 7 $\mu$m or more.

However, the average particle size (Y $\mu$m) of the porous filler 21b is preferably 30 $\mu$m or less. In this case, an oil film $F_O$ is more easily formed on the surface of the first resin layer 21 compared with the case where the average particle size (Y $\mu$m) of the porous filler 21b exceeds 30 $\mu$m; therefore, the packaging material film 20 can provide the oil-in-water-dispersed contents C enclosed in the packaging with better sliding properties.

The average particle size (Y $\mu$m) of the porous filler 21b is more preferably 20 $\mu$m or less, and still more preferably 15 $\mu$m or less.

The content percentage of the porous filler 21b in the first resin layer 21 is 0.5 to 30 mass%. In this case, the packaging material film 20 can provide the oil-in-water-dispersed contents C enclosed in the packaging with better sliding properties compared with the case where the content percentage of the porous filler 21b is out of the above range. The content percentage of the porous filler 21b in the first resin layer 21 is preferably 1 to 15 mass%, and more preferably 3 to 10 mass%.

From the viewpoint of exhibiting even better sliding properties, the first resin layer 21 may further contain an additive selected from an elastomer composed of a block copolymer of polypropylene and polyethylene, a polypropylene-based elastomer, a polyethylene-based elastomer, and a combination of two or more thereof.

By further incorporating the elastomer in the first resin layer 21, an oil film is uniformly and stably formed on the surface of the first resin layer 21 when a packaging bag is formed using the packaging material film 20, oil-in-water-dispersed contents are enclosed in the packaging bag, and the packaging bag is subjected to heat treatment. Therefore, the packaging material film 20 can provide the oil-in-water-dispersed contents with even better sliding properties.

From the viewpoint of compatibility with the polyolefin resin contained in the first resin layer 21 and the ease of absorption of the oil component by heat treatment, the additive preferably includes an elastomer composed of a block copolymer of polypropylene and polyethylene.

The elastomer composed of a block copolymer of polypropylene and polyethylene is a block copolymer constituted by a polyethylene unit composed of polyethylene or an ethylene-$\alpha$-olefin copolymer and a polypropylene unit composed of polypropylene or a propylene-$\alpha$-olefin copolymer. This block copolymer may have any structure of a diblock copolymer, a triblock copolymer, and a multiblock copolymer.

The content percentage of the additive (when a plurality of additives are added, the total content percentage of the additives) is not particularly limited but is, for example, 35 mass% or less, preferably 1 to 30 mass%, more preferably 2 to 25 mass%, and still more preferably 3 to 20 mass% relative to 100 mass% of the polyolefin resin.

The polyethylene unit or an amorphous portion in the elastomer included in the additive has a property of absorbing oil. Therefore, these additives promote stable and uniform formation of the oil film $F_O$, and thus sliding properties of the contents can be further improved.

The thickness (X $\mu$m) of the first resin layer 21 refers to a value determined as described below.

(1) First, the packaging material film 20 is fixed with an embedding resin (acrylic resin) to prepare a structure.
(2) A sample for cross-sectional observation is cut from the structure with a microtome.
(3) A cross section of the cut sample for cross-sectional observation is observed with a microscope (product name: VHX-1000, manufactured by Keyence Corporation).
(4) A thickness is measured in the thickness direction of the first resin layer 21 at three points where the porous filler 21b is not present, and the average of the thicknesses at the three points is calculated as the thickness (X $\mu$m) of the first resin layer 21.

The thickness (X $\mu$m) of the first resin layer 21 is, for example, 2 to 100 $\mu$m, preferably 4 to 70 $\mu$m, more

preferably 6 to 50 $\mu$m, and still more preferably 8 to 30 $\mu$m. When the thickness of the first resin layer 21 is within the above range, both sliding properties of the contents C and heat-sealing properties can be achieved at high levels. Herein, the heat-sealing properties refer to properties of being able to be heat-sealed under conditions at 100°C to 200°C and 0.1 to 0.3 MPa for one to three seconds, for example.

The ratio Y/X of the average particle size Y $\mu$m of the porous filler 21b to the thickness X $\mu$m of the first resin layer 21 is 0.02 to 3.5. When the ratio Y/X is within this range, suitable irregularities are formed on the surface S of the first resin layer 21. If the ratio Y/X is less than 0.02, irregularities of the surface S are not sufficiently formed, and thus the contents C cannot be provided with sufficient sliding properties. On the other hand, if the ratio Y/X exceeds 3.5, irregularities are excessively formed on the surface S, and the irregularities may hinder the sliding of the contents C. The ratio Y/X is preferably 0.05 or more, more preferably 0.1 or more, and still more preferably 0.3 or more. The ratio Y/X is preferably 3.0 or less, more preferably 2.5 or less, and still more preferably 1.8 or less. The Y/X may be 1.5 or less, or 1.2 or less.

The arithmetical mean roughness Sa of the surface S of the first resin layer 21 is preferably 2.0 $\mu$m or less. In this case, suitable irregularities are likely to be formed on the surface S of the first resin layer 21 compared with the case where Sa exceeds 2.0 $\mu$m, and the oil-in-water-dispersed contents C can be provided with better sliding properties. The arithmetical mean roughness Sa of the surface S is more preferably 1.5 $\mu$m or less, and still more preferably 1 $\mu$m or less.

The arithmetical mean roughness Sa of the surface S is preferably 0.1 $\mu$m or more, more preferably 0.3 $\mu$m or more, and still more preferably 0.5 $\mu$m or more.

The arithmetical mean roughness Sa of the surface S can be adjusted by, for example, the blending amount and average particle size of the porous filler 21b and film formation conditions (such as the thickness and the temperature) of the first resin layer 21. The value of "arithmetical mean roughness Sa" as used herein indicates a value measured using a laser microscope (trade name "OLS-4000", manufactured by Olympus Corporation) under the following conditions.

- Magnification of objective lens: 50 times
- Cut-off: None

(Second Resin Layer)

The second resin layer 22 is a layer disposed between the first resin layer 21 and the substrate 10. When the packaging material 100 further includes the second resin layer 22, the packaging material 100 can be provided with functions based on functions (such as heat-sealing properties, heat resistance and impact resistance, and oxygen-water vapor barrier properties) of the second resin layer 22. The second resin layer 22 preferably contains a thermoplastic resin from the viewpoint of improving heat-sealing properties, for example. Specific examples of the thermoplastic resin include polyolefin resins, ethylene-$\alpha,\beta$-unsaturated carboxylic acid copolymers and esterified products and ionically crosslinked products thereof, ethylene-vinyl acetate copolymers and saponified products thereof, polyvinyl acetate and saponified products thereof, polycarbonate resins, thermoplastic polyester resins, ABS resins, polyacetal resins, polyamide resins, polyphenylene oxide resins, polyimide resins, polyurethane resins, polylactic acid resins, furan resins, and silicone resins. These thermoplastic resins may be used alone or in combination of two or more thereof.

The thickness of the second resin layer 22 can be appropriately determined according to the use of the packaging material 100. The thickness of the second resin layer 22 is, for example, 1 to 300 $\mu$m, preferably 2 to 200 $\mu$m, more preferably 5 to 150 $\mu$m, and still more preferably 10 to 100 $\mu$m.

(Substrate)

The substrate 10 is not particularly limited as long as the substrate serves as a support and has durability against heat treatment such as retort treatment or boiling treatment, and examples thereof include resin films and metal foil. Examples of resin films include films including at least one of polyolefins (such as polyethylene (PE) and polypropylene (PP)), acid-modified polyolefins, polyesters (such as polyethylene terephthalate (PET)), polyamides (PA), polyvinyl chloride (PVC), cellulose acetate, and cellophane resins. These films may be stretched films or unstretched films. Examples of metal foil include aluminum foil and nickel foil. The substrate 10 may be a laminate of a plurality of substrates made of different materials or may include a coating layer or a metal vapor-deposited layer.

The thickness of the substrate 10 can be appropriately determined according to the use of the packaging material 100. The thickness of the substrate 10 is, for example, 1 to 500 $\mu$m and may be 10 to 100 $\mu$m.

(Adhesive Layer)

The adhesive layer 30 bonds the packaging material film 20 (laminate of the first resin layer 21 and the second resin layer 22) to the substrate 10. An adhesive that forms the adhesive layer 30 is not particularly limited as long as the adhesive can bond the packaging material film 20 to the substrate 10. Examples of such an adhesive include polyurethane resins obtained by causing a bi- or higher functional isocyanate compound to react with a main agent such as a polyester polyol, a polyether polyol, an acrylic polyol, or a carbonate polyol. These polyols may be used alone or in combination of two or more thereof.

In order to promote adhesion, the above polyurethane resin in the adhesive layer 30 may be blended with a carbodiimide compound, an oxazoline compound, an epoxy compound, a phosphorus compound, a silane coupling agent, or the like. The polyurethane resin may be blended with various other additives and stabilizers depending on the performance required for the adhesive layer 30.

The thickness of the adhesive layer 30 is, for example, 1 to 10 μm and may be 3 to 7 μm from the viewpoint of obtaining, for example, desired adhesive strength, followability, and processability.

The substrate 10 may be provided with an adhesive primer (anchor coat). The material of the adhesive primer may be, for example, a polyester resin, a polyurethane resin, a polyallylamine resin, a polyethyleneimine resin, a polybutadiene resin, an ethylene-vinyl acetate copolymer, or a chlorine-vinyl acetate resin. The adhesive primer may be blended with various curing agents and additives that can be used as an adhesive, as needed.

<Method for Producing Packaging Material>

Next, a method for producing the packaging material 100 will be described.

The packaging material 100 can be obtained by laminating a packaging material film 20 and a substrate 10 with an adhesive. Examples of the method for bonding the substrate 10 to the packaging material film 20 include lamination methods with an adhesive and lamination methods with heat treatment.

As the lamination methods with an adhesive, various publicly known lamination methods such as a dry lamination method, a wet lamination method, and a non-solvent lamination method can be employed.

The lamination methods with heat treatment are broadly classified into methods (1) to (4) below.

(1) A method including extruding an adhesive resin between a packaging material film 20 prepared in advance and a substrate 10, and performing lamination

(2) A method including co-extruding a packaging material film 20 and an adhesive resin, and performing lamination with a substrate 10 such that the adhesive resin faces the substrate 10

(3) A method including bonding a laminate product obtained by the method (1) or (2) by further applying a pressure while heating with a heat roll

(4) A method including further storing a laminate product obtained by the method (1) or (2) in a high-temperature atmosphere, or causing the laminate product to pass through a drying/baking furnace in a high-temperature atmosphere

<Packaging>

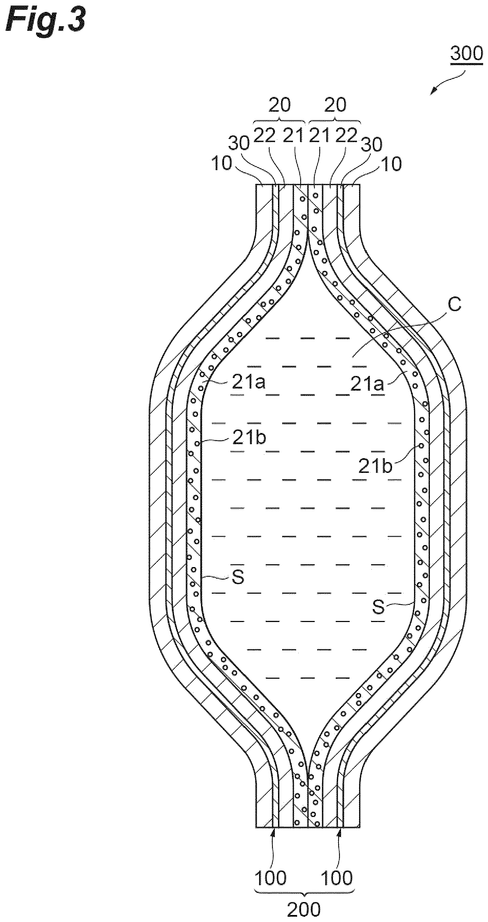

Next, an embodiment of packaging according to the present disclosure will be described with reference to Fig. 3. Fig. 3 is a sectional view illustrating an embodiment of packaging according to the present disclosure.

As illustrated in Fig. 3, packaging 300 includes a packaging bag 200 and oil-in-water-dispersed contents enclosed in the packaging bag 200. In the packaging 300, the first resin layers 21 of the packaging material films 20 of the packaging bag 200 are arranged on the inner side and in contact with the oil-in-water-dispersed contents C.

According to the packaging 300, the packaging material films 20 included in packaging materials 100 that form the packaging bag 200 can provide, through heat treatment, the oil-in-water-dispersed contents C coming in contact with the first resin layer 21 with good sliding properties. Therefore, when the packaging 300 is subjected to heat treatment such as retort treatment or boiling treatment, in discharging the oil-in-water-dispersed contents C from the packaging 300 after opening of the packaging 300, the oil-in-water-dispersed contents C can be easily slid down. This can reduce the amount of residual liquid of the oil-in-water-dispersed contents C, prevent waste of the contents C, and prevent stains due to adhesion of the contents C, and this enables the operation of discharging the contents C to be efficiently performed.

The packaging 300 can be obtained by forming the packaging bag 200 using the packaging material 100, and enclosing the oil-in-water-dispersed contents C in the packaging bag 200.

Although embodiments of the present disclosure have been described in detail above, the present disclosure is not limited to the above embodiments. For example, although in the above embodiments, the packaging material film 20 is formed of the first resin layer 21 and the second resin layer 22, the packaging material film 20 may be formed of the first resin layer 21 alone.

The packaging material 100 includes the adhesive layer 30 that bonds the packaging material film 20 to the substrate 10; however, the adhesive layer 30 may be omitted if the packaging material film 20 and the substrate 10 can be directly fusion-bonded together.

**EXAMPLES**

Hereinafter, the present disclosure will be more specifically described with reference to Examples and Comparative Examples. The present disclosure is not limited to the following Examples.

Materials used in Examples and Comparative Examples are as follows.

<Polyolefin Resin>

(A1) Random polypropylene resin (propylene-ethylene random copolymer, trade name "Prime Polypro F744NP" manufactured by Prime Polymer Co., Ltd.)

(A2) Block polypropylene resin (homopolypropylene, ethylene propylene rubber, and polyethylene, trade name "NOVATEC BC5FA" manufactured by Japan Polypropylene Corporation)

(A3) Block polypropylene resin (homopolypropylene, ethylene propylene rubber, and polyethylene, trade name "NOVATEC BC3HF" manufactured by Japan Polypropylene Corporation)

<Porous Filler>

(B1) Porous silica filler (average particle size: 3 $\mu$m, oil absorption: 150 mL/100 g, without hydrophobic treatment, trade name "SUNSPHERE H-31", manufactured by AGC Si-Tech Co., Ltd.)

(B2) Porous silica filler (average particle size: 5 $\mu$m, oil absorption: 400 mL/100 g, without hydrophobic treatment, trade name "SUNSPHERE H-53", manufactured by AGC Si-Tech Co., Ltd.)

(B3) Porous silica filler (average particle size: 12 $\mu$m, oil absorption: 150 mL/100 g, without hydrophobic treatment, trade name "SUNSPHERE H-121", manufactured by AGC Si-Tech Co., Ltd.)

(B4) Porous silica filler (average particle size: 12 $\mu$m, oil absorption: 120 mL/100 g, without hydrophobic treatment, trade name "SUNSPHERE H-121-N", manufactured by AGC Si-Tech Co., Ltd.)

(B5) Porous silica filler (average particle size: 12 $\mu$m, oil absorption: 300 mL/100 g, without hydrophobic treatment, trade name "SUNSPHERE H-122", manufactured by AGC Si-Tech Co., Ltd.)

(B6) Porous silica filler (average particle size: 20 $\mu$m, oil absorption: 150 mL/100 g, without hydrophobic treatment, trade name "SUNSPHERE H-201", manufactured by AGC Si-Tech Co., Ltd.)

(B7) Porous silica filler (average particle size: 7 $\mu$m, oil absorption: 120 mL/100 g, without hydrophobic treatment, trade name "SUNSPHERE L-71-N", manufactured by AGC Si-Tech Co., Ltd.)

(B8) Porous silica filler (average particle size: 2.7 $\mu$m, oil absorption: 110 mL/100 g, DBA value: 175 mEq/kg, trade name "SYLOPHOBIC 507", manufactured by Fuji Silysia Chemical Ltd.)

(B9) Porous silica filler (average particle size: 6.7 $\mu$m, oil absorption: 50 mL/100 g, DBA value: 200 mEq/kg, trade name "SYLOPHOBIC 603", manufactured by Fuji Silysia Chemical Ltd.)

(B10) Porous silica filler (average particle size: 4.1 $\mu$m, oil absorption: 170 mL/100 g, DBA value: 65 mEq/kg, trade name "SYLOPHOBIC 702", manufactured by Fuji Silysia Chemical Ltd.)

(B11) Porous silica filler (average particle size: 8 $\mu$m, oil absorption: 165 mL/100 g, DBA value: 70 mEq/kg, trade name "SYLOPHOBIC 4004", manufactured by Fuji Silysia Chemical Ltd.)

<Additive>

(C1) Block copolymer of polypropylene and polyethylene (C2) Polypropylene-based elastomer (trade name "TAFMER PN3560", manufactured by Mitsui Chemicals, Inc.)

(C3) Polyethylene-based elastomer (trade name "TAFMER A4085S", manufactured by Mitsui Chemicals, Inc.)

<Preparation of Packaging Material>

(Examples 1 to 37 and Comparative Examples 1 to 5)

Packaging material films (sealant films) that had a two-layer structure including a first resin layer and a second resin layer with the compositions shown in Tables 1 to 3 were prepared using a co-extruder. At this time, polyolefin resins had the compositions shown in Tables 1 to 3. "bPP1" represents the block polypropylene resin (A2), "rPP" represents the random polypropylene resin (A1), and "rPP/bPP1" is a mixture of "rPP" and "bPP1" (mass ratio: rPP:bPP1 = 50:50). "bPP2" constituting the second resin layer represents the block polypropylene resin (A3). The content percentages of the porous filler and the additive are values determined when the mass of the polyolefin resin is assumed to be 100 mass%. Namely, the content percentages of the porous filler and the additive are amounts added relative to 100 mass% of the polyolefin resin.

Next, each of the obtained packaging material films and a PET film (trade name "EMBLET", manufactured by UNITIKA Ltd.) serving as a substrate and having a thickness of 38 $\mu$m were dry-laminated using a polyurethane-based adhesive (manufactured by Mitsui Chemicals, Inc.), and the resulting laminate was aged at 50°C for five days to obtain packaging materials. Note that, in Examples and Comparative Examples, the first resin layer and the second resin layer were formed such that the total thickness of the first resin layer and the second resin layer was 60 $\mu$m.

<Measurement of Arithmetical Mean Roughness Sa>

For the packaging materials of Examples 1 to 37 and Comparative Examples 1 to 5, the arithmetical mean roughness Sa of the first resin layer was measured with a laser microscope (trade name "OLS-4000", manufactured by Olympus Corporation) under the following conditions. Tables 1 to 3 show the results.

- Magnification of objective lens: 50 times
- Cut-off: None

<Evaluation of Sliding Properties of Contents>

(Evaluation of Residual Liquid after Retort Treatment)

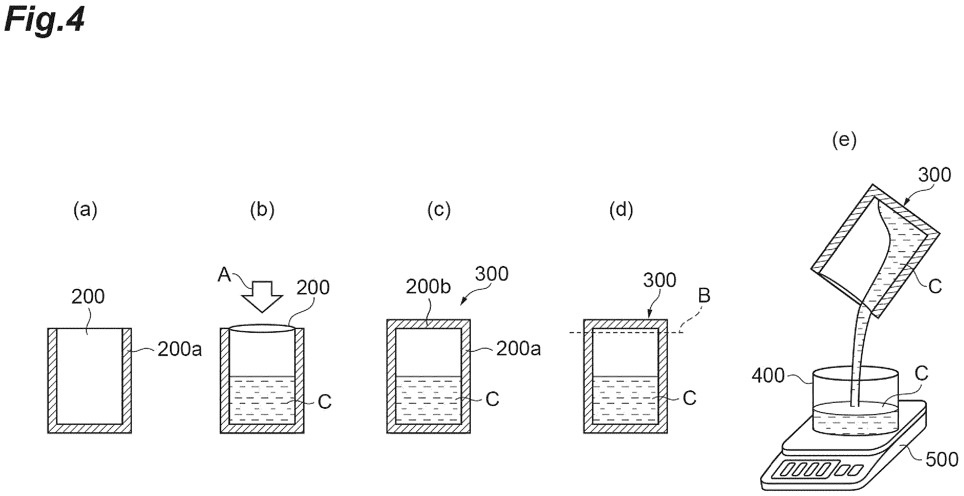

The packaging materials obtained in Examples and Comparative Examples were evaluated in terms of sliding properties of contents after retort treatment by a method illustrated in Figs. 4(a) to 4(e).

First, two sheets of a packaging material cut to a size of 150 mm in length × 138 mm in width were prepared. Subsequently, the two sheets of the packaging material were stacked such that the first resin layers of the sheets were positioned on the inner side, and three sides thereof were sealed with a heat sealer. Thus, as illustrated in Fig. 4(a), a packaging bag 200 formed of a pouch having a sealed portion 200a at three sides and an opening at one side was prepared. At this time, the three sides were heat-sealed under conditions at 190°C and 0.3 MPa for two seconds, and the sealed portion 200a had a width of 10 mm.

Next, as illustrated in Fig. 4(b), 180 g of curry (trade name "Bon Curry Gold, medium spicy", amount of lipid 7.0 g/180 g, manufactured by Otsuka Foods Co., Ltd.) serving as contents C was poured from the opening of the packaging bag 200 in the direction indicated by arrow A.

Subsequently, the opening (remaining one side) was sealed with a heat sealer to form a sealed portion 200b at the remaining one side, as illustrated in Fig. 4(c). Thus, the packaging 300 whose four sides were sealed and in which the contents C were enclosed was prepared. At this time, the opening was heat-sealed under conditions at 190°C and 0.3 MPa for two seconds, and the sealed portion 200b had a width of 10 mm.

The packaging 300 prepared as described above was charged in a high-temperature high-pressure cooking sterilizer (manufactured by Hitachi Capital Corporation) and subjected to retort treatment with high-temperature water vapor. The retort treatment was conducted under the following conditions.

- Pressure: 0.2 MPa
- Temperature 121°C
- Treatment time: 30 minutes

After the retort treatment, the packaging 300 was treated in hot water at 100°C for five minutes. Subsequently, as illustrated in Fig. 4(d), an upper portion of the packaging 300 was cut along dashed line B to form an opening for pouring. Next, as illustrated in Fig. 4(e), the packaging 300 whose upper portion had been cut was turned upside down and held for 10 seconds in a state where the opening for pouring was tilted by 45° with respect to the horizontal plane to discharge the contents C into a container 400, and the amount of discharge was weighed with a balance 500. A residual liquid rate (%) was determined from the weighed amount of discharge by the following formula.

$$\text{Residual liquid rate (\%)} = \{(180 - \text{amount of discharge})/180\} \times 100$$

The same measurement was conducted three times using different samples of the packaging 300, and the average of the three measurement values of the residual liquid rate was calculated as an average residual liquid rate. In addition, sliding properties of the contents were evaluated on the basis of the average residual liquid rate in accordance with the following evaluation criteria. Tables 1 to 3 show the average residual liquid rate and the evaluation results of sliding properties of the contents.

A: The average residual liquid rate is less than 6.5%.
B: The average residual liquid rate is 6.5% or more and less than 8.0%.
C: The average residual liquid rate is 8.0% or more and less than 10.0%.
D: The average residual liquid rate is 10.0% or more.

(Evaluation of Appearance after Retort Treatment)

When the residual liquid rate was measured as described above, a discharge behavior of the contents (curry) C during the discharge of the contents C from the packaging 300 was visually observed. Thus, an appearance evaluation was also conducted in accordance with the following evaluation criteria. Tables 1 to 3 show the results.

A: It is observed that the contents cleanly slide down, and substantially no contents adhere to the packaging material film.
B: It is observed that the contents slide down, and the amount of contents adhering to the packaging material film is small.
C: It is observed that the contents slide down, but the amount of contents adhering to the packaging material film is large.
D: It is not observed that the contents slide down.

[Table 1]

| | First resin layer | | | | | | | | | | | Second resin layer | Sliding properties of contents | | |
| | | Porous filler | | | | | Additive | | | | | | | | |
| | Polyolefin resin | Type | Hydrophobic treatment | Average particle size Y [μm] | Content percentage [mass%] | Oil absorption (mL/100 g) | Type | Content percentage [mass%] | Thickness X [μm] | Y/X | Sa [μm] | | Average residual liquid rate (%) | Appearance | Evaluation |
|---|---|---|---|---|---|---|---|---|---|---|---|---|---|---|---|
| Example 1 | rPP/bPP1 | B9 | Treated | 6.7 | 1 | 50 | - | - | 15 | 0.45 | 0.41 | bPP2 | 7.5 | C | B |
| Example 2 | rPP/bPP1 | B9 | Treated | 6.7 | 5 | 50 | - | - | 15 | 0.45 | 0.58 | bPP2 | 7.2 | C | B |
| Example 3 | rPP/bPP1 | B1 | - | 3 | 3 | 150 | - | - | 15 | 0.20 | 0.19 | bPP2 | 7.2 | C | B |
| Example 4 | rPP/bPP1 | B1 | - | 3 | 10 | 150 | - | - | 15 | 0.20 | 0.31 | bPP2 | 6.8 | B | B |
| Example 5 | rPP/bPP1 | B6 | - | 20 | 5 | 150 | - | - | 15 | 1.33 | 2.13 | bPP2 | 8.3 | C | C |
| Example 6 | rPP/bPP1 | B2 | - | 5 | 5 | 400 | - | - | 15 | 0.33 | 0.43 | bPP2 | 7.1 | C | B |
| Example 7 | rPP/bPP1 | B2 | - | 5 | 10 | 400 | - | - | 15 | 0.33 | 0.54 | bPP2 | 7.3 | C | B |
| Example 8 | rPP/bPP1 | B7 | - | 7 | 5 | 120 | - | - | 7.5 | 0.93 | 0.43 | bPP2 | 7.4 | C | B |
| Example 9 | rPP/bPP1 | B7 | - | 7 | 5 | 120 | - | - | 15 | 0.47 | 0.63 | bPP2 | 6.0 | A | A |
| Example 10 | rPP/bPP1 | B7 | - | 7 | 5 | 120 | C1 | 10 | 15 | 0.47 | 0.63 | bPP2 | 4.9 | A | A |
| Example 11 | rPP/bPP1 | B7 | - | 7 | 5 | 120 | C2 | 10 | 15 | 0.47 | 0.63 | bPP2 | 5.1 | A | A |
| Example 12 | rPP/bPP1 | B7 | - | 7 | 5 | 120 | C3 | 10 | 15 | 0.47 | 0.63 | bPP2 | 5.2 | A | A |

(continued)

| | First resin layer | | | | | | | | | | | | Sliding properties of contents | | |
| | Polyolefin resin | Porous filler | | | | | Additive | | Thickness X [μm] | Y/X | Sa [μm] | Second resin layer | Average residual liquid rate (%) | Appearance | Evaluation |
| | | Type | Hydrophobic treatment | Average particle size Y [μm] | Content percentage [mass%] | Oil absorption (mL/100 g) | Type | Content percentage [mass%] | | | | | | | |
| Example 13 | rPP/bPP1 | B7 | - | 7 | 5 | 120 | - | - | 30 | 0.23 | 1.25 | bPP2 | 7.2 | C | B |

[Table 2]

| | First resin layer | | | | | | | | | | | Second resin layer | Sliding properties of contents | | |
|---|---|---|---|---|---|---|---|---|---|---|---|---|---|---|---|
| | Polyolefin resin | Porous filler | | | | | Additive | | Thickness X [μm] | Y/X | Sa [μm] | | Average residual liquid rate (%) | Appearance | Evaluation |
| | | Type | Hydrophobic treatment | Average particle size Y [μm] | Content percentage [mass%] | Oil absorption (mL/100 g) | Type | Content percentage [mass%] | | | | | | | |
| Example 14 | rPP/bPP1 | B7 | - | 7 | 10 | 120 | - | - | 15 | 0.47 | 1.12 | bPP2 | 6.9 | B | B |
| Example 15 | rPP/bPP1 | B7 | - | 7 | 25 | 120 | - | - | 15 | 0.47 | 2.54 | bPP2 | 8.5 | C | C |
| Example 16 | rPP/bPP1 | B3 | - | 12 | 5 | 150 | - | - | 15 | 0.80 | 0.99 | bPP2 | 5.8 | A | A |
| Example 17 | rPP/bPP1 | B3 | - | 12 | 10 | 150 | - | - | 15 | 0.80 | 1.39 | bPP2 | 7.4 | C | B |
| Example 18 | rPP/bPP1 | B4 | - | 12 | 5 | 120 | - | - | 15 | 0.80 | 0,96 | bPP2 | 5.6 | A | A |
| Example 19 | rPP/bPP1 | B4 | - | 12 | 10 | 120 | - | - | 15 | 0.80 | 1.41 | bPP2 | 7.5 | C | B |
| Example 20 | rPP/bPP1 | B4 | - | 12 | 5 | 120 | - | - | 4 | 3.00 | 0.38 | bPP2 | 6.7 | B | B |
| Example 21 | rPP/bPP1 | B5 | - | 12 | 5 | 300 | - | - | 15 | 0.80 | 1.02 | bPP2 | 6.2 | A | A |
| Example 22 | rPP/bPP1 | B5 | - | 12 | 10 | 300 | - | - | 15 | 0.80 | 1.43 | bPP2 | 7.7 | C | B |
| Example 23 | rPP/bPP1 | B8 | Treated | 2.7 | 10 | 110 | - | - | 80 | 0.03 | 0.46 | bPP2 | 6.7 | A | A |
| Example 24 | rPP/bPP1 | B10 | Treated | 4.1 | 5 | 170 | - | - | 15 | 0.27 | 0.39 | bPP2 | 6.9 | C | B |
| Example 25 | rPP/bPP1 | B11 | Treated | 8 | 5 | 165 | - | - | 15 | 0.53 | 0.48 | bPP2 | 5.5 | A | A |

EP 4 215 361 A1

(continued)

| | First resin layer | | | | | | | | | | | Second resin layer | Sliding properties of contents | | |
| | | Porous filler | | | | | Additive | | Thickness X [μm] | Y/X | Sa [μm] | | Average residual liquid rate (%) | Appearance | Evaluation |
| | Polyolefin resin | Type | Hydrophobic treatment | Average particle size Y [μm] | Content percentage [mass%] | Oil absorption (mL/100 g) | Type | Content percentage [mass%] | | | | | | | |
| Example 26 | rPP/bPP1 | B11 | Treated | 8 | 10 | 165 | - | - | 15 | 0.53 | 0.71 | bPP2 | 5.2 | A | A |

[Table 3]

| | First resin layer | | | | | | | | | | | Second resin layer | Sliding properties of contents | | |
|---|---|---|---|---|---|---|---|---|---|---|---|---|---|---|---|
| | Polyolefin resin | Porous filler | | | | | Additive | | Thickness X [μm] | Y/X | Sa [μm] | | Average residual liquid rate (%) | Appearance | Evaluation |
| | | Type | Hydrophobic treatment | Average particle size Y [μm] | Content percentage [mass%] | Oil absorption (mL/ 100 g) | Type | Content percentage [mass%] | | | | | | | |
| Example 27 | rPP/bPP1 | B11 | Treated | 8 | 10 | 165 | C1 | 5 | 15 | 0.53 | 0.71 | bPP2 | 4.4 | A | A |
| Example 28 | rPP/bPP1 | B11 | Treated | 8 | 10 | 165 | C1 | 10 | 15 | 0.53 | 0.71 | bPP2 | 3.9 | A | A |
| Example 29 | rPP/bPP1 | B11 | Treated | 8 | 10 | 165 | C1 | 30 | 15 | 0.53 | 0.71 | bPP2 | 4.9 | A | A |
| Example 30 | rPP/bPP1 | B11 | Treated | 8 | 10 | 165 | C2 | 5 | 15 | 0.53 | 0.71 | bPP2 | 4.5 | A | A |
| Example 31 | rPP/bPP1 | B11 | Treated | 8 | 10 | 165 | C2 | 10 | 15 | 0.53 | 0.71 | bPP2 | 4.1 | A | A |
| Example 32 | rPP/bPP1 | B11 | Treated | 8 | 10 | 165 | C2 | 30 | 15 | 0.53 | 0.71 | bPP2 | 4.5 | A | A |
| Example 33 | rPP/bPP1 | B11 | Treated | 8 | 10 | 165 | C3 | 5 | 15 | 0.53 | 0.71 | bPP2 | 4.2 | A | A |
| Example 34 | rPP/bPP1 | B11 | Treated | 8 | 10 | 165 | C3 | 10 | 15 | 0.53 | 0.71 | bPP2 | 4.5 | A | A |
| Example 35 | rPP/bPP1 | B11 | Treated | 8 | 10 | 165 | C3 | 30 | 15 | 0.53 | 0.71 | bPP2 | 5.0 | A | A |
| Example 36 | rPP | B11 | Treated | 8 | 10 | 165 | - | - | 15 | 0.53 | 0.70 | bPP2 | 8.1 | C | C |
| Example 37 | bPP1 | B11 | Treated | 8 | 10 | 165 | - | - | 15 | 0.53 | 0.71 | bPP2 | 6.5 | B | B |
| Comparative Example 1 | rPP/bPP1 | - | - | - | - | - | - | - | 15 | - | 0.14 | bPP2 | 12.5 | D | D |
| Comparative Example 2 | rPP/bPP1 | B6 | - | 20 | 5 | 150 | - | - | 5 | 4.00 | 4.23 | bPP2 | 11.4 | D | D |
| Comparative Example 3 | rPP/bPP1 | B8 | - | 2.7 | 10 | 110 | - | - | 150 | 0.018 | 0.25 | bPP2 | 12.2 | D | D |
| Comparative Example 4 | rPP/bPP1 | B7 | - | 7 | 0.3 | 120 | - | - | 15 | 0.467 | 0.18 | bPP2 | 11.9 | D | D |
| Comparative Example 5 | rPP/bPP1 | B7 | - | 7 | 32 | 120 | - | - | 30 | 0.233 | 3.26 | bPP2 | 10.7 | D | D |

From the results shown in Tables 1 to 3, the packaging obtained in Examples 1 to 37 exhibited a low average residual liquid rate, and it was observed that the contents slid down in appearance. In contrast, the packaging obtained in Comparative Examples 1 to 5 exhibited a high average residual liquid rate, and it was not observed that the contents slid down in appearance.

From the above, according to the packaging material film of the present disclosure, it was confirmed that oil-in-water-dispersed contents could be provided with good sliding properties through heat treatment.

**Reference Signs List**

10 ⋯ substrate, 20 ⋯ packaging material film, 21 ⋯ first resin layer, 21a ⋯ resin composition, 21b ⋯ porous filler, 30 ⋯ adhesive layer, 100 ⋯ packaging material, 200 ⋯ packaging bag, 300 ⋯ packaging, C ⋯ contents, $C_O$ ⋯ oil component, S ⋯ surface of first resin layer, $F_O$ ⋯ oil film

**Claims**

1. A packaging material film comprising a first resin layer that contains a polyolefin resin and a porous filler,

   wherein a ratio Y/X of an average particle size Y $\mu$m of the porous filler to a thickness X $\mu$m of the first resin layer is 0.02 to 3.5, and
   a content percentage of the porous filler in the first resin layer is 0.5 to 30 mass%.

2. The packaging material film according to claim 1, wherein the porous filler has an oil absorption of 100 to 380 mL/100 g.

3. The packaging material film according to claim 1 or 2, wherein a surface of the first resin layer has an arithmetical mean roughness Sa of 2.0 $\mu$m or less.

4. The packaging material film according to any one of claims 1 to 3, wherein the porous filler has an average particle size of 5 $\mu$m or more.

5. The packaging material film according to any one of claims 1 to 4, wherein the porous filler has a main portion and a cover portion covering at least a part of a surface of the main portion, and the cover portion is composed of a hydrophobic material.

6. The packaging material film according to any one of claims 1 to 5, wherein the first resin layer further contains at least one additive selected from the group consisting of an elastomer composed of a block copolymer of polypropylene and polyethylene, a polypropylene-based elastomer, and a polyethylene-based elastomer.

7. A packaging material comprising:

   a substrate; and
   a packaging material film disposed on the substrate,
   wherein the packaging material film comprises the packaging material film according to any one of claims 1 to 6, and
   a surface of the first resin layer of the packaging material film on a side opposite from the substrate is exposed.

8. A packaging bag for storing oil-in-water-dispersed contents,
   wherein the packaging bag is formed using the packaging material according to claim 7, and the first resin layer is arranged on an inner side.

9. Packaging comprising:

   the packaging bag according to claim 8; and
   oil-in-water-dispersed contents enclosed in the packaging bag.

*Fig.1*

# Fig.2

(a)

Co

21b

S

21a

21

(b)

Co

C

Fo

S

21a

21

21b

Co

(c)

Co

C

Fo

S

21b

21a

21

Co

# Fig.3

# *Fig.4*

(a)     (b)     (c)     (d)     (e)

## INTERNATIONAL SEARCH REPORT

International application No.

**PCT/JP2021/042473**

### A. CLASSIFICATION OF SUBJECT MATTER

*B32B 27/00*(2006.01)i; *B32B 27/20*(2006.01)i; *B32B 27/32*(2006.01)i; *B65D 65/40*(2006.01)i; *B65D 75/26*(2006.01)i
FI:    B65D65/40 D; B65D75/26; B32B27/00 H; B32B27/32 Z; B32B27/20 Z

According to International Patent Classification (IPC) or to both national classification and IPC

### B. FIELDS SEARCHED

Minimum documentation searched (classification system followed by classification symbols)

B32B27/00; B32B27/20; B32B27/32; B65D65/40; B65D75/26

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2019-14521 A (TOPPAN PRINTING CO., LTD.) 31 January 2019 (2019-01-31) paragraphs [0012]-[0061], fig. 1, 2 | 1, 3-4, 7 |
| Y | | 2-7 |
| Y | JP 2015-134901 A (TOYO INK SC HOLDINGS CO., LTD.) 27 July 2015 (2015-07-27) claim 3 | 2-7 |
| Y | JP 2014-54757 A (TOPPAN PRINTING CO., LTD.) 27 March 2014 (2014-03-27) paragraphs [0034]-[0039] | 5-7 |
| Y | JP 2002-331578 A (OKURA INDUSTRIAL CO., LTD.) 19 November 2002 (2002-11-19) claims 1, 2, paragraphs [0008], [0009], [0013] | 6-7 |

☐ Further documents are listed in the continuation of Box C.        ☑ See patent family annex.

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **04 January 2022** | **18 January 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

| Patent document cited in search report | | | Publication date (day/month/year) | Patent family member(s) | Publication date (day/month/year) |
|---|---|---|---|---|---|
| JP | 2019-14521 | A | 31 January 2019 | (Family: none) | |
| JP | 2015-134901 | A | 27 July 2015 | (Family: none) | |
| JP | 2014-54757 | A | 27 March 2014 | (Family: none) | |
| JP | 2002-331578 | A | 19 November 2002 | (Family: none) | |

International application No.

**PCT/JP2021/042473**

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018003978 A